# EUROPEAN PATENT APPLICATION

(11) **EP 1 800 947 A1**
(43) Date of publication of application: **27.06.2007**
(21) Application number: 06125247.4
(22) Date of filing: 01.12.2006
(51) Int. Cl.: B60Q 1/12

(54) **Adaptive front lighting for vehicles**

(30) Priority: 22.12.2005 GB 0526111
(71) Applicant: Nissan Motor Manufacturing (UK) Ltd., Cranfield, Bedfordshire MK43 0DB (GB)
(72) Inventor: Russell-Smith, Ben Nissan Motor Manufact. (UK) Ltd, Mousloe Cranfield, Bedfordshire MK43 0DB (GB)
(74) Representative: Hufton, Victoria Alice

(57) **Abstract**

An adaptive front lighting system for a vehicle comprises first and second light sources situated respectively toward the left and right sides of the vehicle (22) with respect to its normal direction of travel. The light sources illuminate selectively to emit light to one or other side of the vehicle (22) corresponding to the steering direction. The first light source is arranged to emit light to the right side of the vehicle (22), and the second light source is arranged to emit light to the left side of the vehicle (22). Thus, the light source that is further from the centre of curvature of the bend (12) illuminates in use. This reduces dazzle due to adjacent obstructions (14) on the inside of the bend (12), and helps to maintain the spread and range of the light output (26).

## Description

This invention relates to adaptive front lighting for vehicles.

It has long been recognised that it is desirable to direct vehicle headlamps in accordance with the direction of a turn being taken, or to be taken, by the vehicle. This 'bending light' technology has been in practical use, albeit sporadically, for at least half a century.

Historically, vehicles with adaptive front lighting have relied upon 'dynamic bending light' solutions. Those solutions are characterised by light sources such as headlamp reflectors that are pivotally mounted to swivel about an upright pivot axis, being movable around that axis by actuators or motors under automatic control. The basic principle is that the headlamp beam angle with respect to the central longitudinal axis of the vehicle is proportional to vehicle steering input, from which the radius of the bend being taken by the vehicle can be inferred.

In recent years, dynamic bending light technology has been applied successfully to xenon projector lighting and, with greater legislative freedom in Europe enabled by more sophisticated control logic, it has enjoyed more widespread acceptance than in the past. In current arrangements, offered by Valeo and Hella for example, motor-driven xenon projector units can pivot 15-20° from the central longitudinal axis of the vehicle. This suits gentle large-radius curves that can be taken at medium to high speed. A drive-motor control unit runs a control algorithm that infers vehicle steering angle from the driver's steering wheel input; moreover, to modify projector movement to suit lower speeds while avoiding dazzle to oncoming drivers, the control algorithm may also be responsive to vehicle speed, as usually determined by wheel speed sensors also used by the vehicle's ABS system. It is even possible to control the angle of nearside and offside projector units independently such that, for example, the inner projector unit nearer the inside of a curve turns more than the other projector unit on the outside of the curve. Similar principles can be applied to halogen reflector lighting, as has been proposed by Visteon for lower-cost vehicles.

Another adaptive lighting solution now permitted by European legislation employs 'fixed bending light' (FBL) technology, also offered by Valeo and others. This technology involves activating an auxiliary lamp to enhance visibility in sharp small-radius curves taken at low to medium speed. To this end, an auxiliary lamp is typically integrated into each headlamp cluster of a vehicle in a heavily offset orientation to direct light laterally and outwardly at approximately 35-45° with respect to the central longitudinal axis of the vehicle. The auxiliary lamp on the inside of a turn illuminates as necessary. That is to say, an auxiliary lamp in the offside headlamp cluster emits light to the offside of the vehicle when the vehicle is turning right, while an auxiliary lamp in the nearside headlamp cluster emits light to the nearside of the vehicle when the vehicle is turning left. In right-hand-drive vehicles, nearside is defined as to the left with respect to the direction of travel of the vehicle and offside is defined as to the right with respect to the direction of travel; the reverse applies in left-hand-drive vehicles.

The auxiliary lamp is typically a halogen lamp but it may be another light source such as a xenon projector or an LED array. It operates under the automatic control of a control unit whose control algorithm takes inputs from a steering angle sensor and from a wheel speed sensor. In this way, the auxiliary lamp provides additional automatic illumination of sharp curves and intersections taken at low to medium speeds, especially when the steering angle is great and the speed is low during low-speed manoeuvring. Preferably the auxiliary lamp does not merely have fully on and off states but can be illuminated with variable intensity between those states, for example by applying variable voltage to the lamp. The auxiliary lamp may even illuminate when the car is stationary and steering lock has been applied in readiness for turning at an intersection or other junction. However, the auxiliary lamp should not illuminate when the vehicle is being reversed so as to avoid dazzling or inadvertently signalling other road users.

It is possible to employ both dynamic bending light and fixed bending light technologies in the same vehicle, so that the driver can benefit from both solutions when driving at the appropriate speeds. In other words, the control algorithms are such that with suitable steering wheel inputs, the auxiliary lamp illuminates at low to medium speed, and the main reflector or projector swivels at medium to high speed. It is even possible to implement both dynamic bending light and fixed bending light solutions in one headlamp cluster: such clusters are already being fitted to some Porsche vehicles. Together, the technologies aim to enhance visibility when negotiating all kinds of bends, curves, corners or other turns such as intersections.

Existing fixed bending light solutions suffer a disadvantage if there is a wall, hedge or other such obstruction close to the vehicle on the inside of a turn. When an auxiliary lamp of the inside headlamp cluster illuminates in that situation, it illuminates the obstruction with such intensity that the driver may be dazzled by reflected light. Moreover, the effectiveness of illumination is reduced because the light output from the auxiliary lamp is unable to spread adequately before encountering the obstruction. Also, the blocking effect of the obstruction prevents the light output from attaining its full range. Hence, despite its propensity to dazzle, the light output from the auxiliary lamp may be inadequate in terms of both spread and range.

Against this background, the invention resides in an adaptive front lighting system for a vehicle, the system comprising: first and second light sources situated respectively toward the left and right sides of the vehicle with respect to its normal direction of travel; a turn sensor arranged to determine vehicle direction; and a controller for controlling the light sources in dependence upon vehicle direction data from the sensor, the controller being programmed selectively to cause a light source to emit light to one or other side of the vehicle corresponding to the vehicle direction; wherein the first light source situated toward the left side of the vehicle is arranged to emit light to the right side of the vehicle, and the second light source situated toward the right side of the vehicle is arranged to emit light to the left side of the vehicle.

The turn sensor is most conveniently a vehicle steering sensor arranged to determine steering direction.

The invention involves illuminating the light source that is further from the centre of curvature of the bend. This reduces dazzle due to adjacent obstructions on the inside of the bend, and helps to maintain the spread and range of the light output.

Preferably the vehicle steering sensor is arranged also to determine steering angle, whereby the controller may be responsive to the steering angle to vary light output from the selected light source accordingly. In particular, the light output may vary in brightness in accordance with steering angle, for example by progressively increasing in brightness with increasing steering angle. Variable light output may be achieved by applying a variable voltage across the light source or by supplying variable power to the light source, for example by pulse width modulation. The light source is suitably a filament bulb but other light sources such as LEDs or xenon projectors are also possible.

The facility for determining steering angle may also be used to define a range of steering wheel movement around the straight-ahead position in which neither of the light sources emits light to a side of the vehicle. This prevents unnecessary operation of the light sources due to steering corrections when driving straight ahead, or on very gentle curves where no lateral illumination is required.

The system of the invention may further comprise a vehicle speed sensor to determine vehicle speed, for example by using the wheel speed sensors of the vehicle's anti-lock brake system (ABS). By receiving vehicle speed data, the controller can modify the operation of the light sources in accordance with vehicle speed in addition to steering data.

For simplicity, the light sources are preferably fixed with respect to the vehicle in a development of existing fixed bending light arrangements. However it is conceivable that their direction of illumination with respect to the vehicle could be varied, either under driver control or by the controller, either before driving or in real-time while driving.

In preferred embodiments of the invention, the light sources are auxiliary lamps supplemental to a main lighting system of the vehicle. Typically the main lighting system will employ first and second headlamp clusters toward the left and right sides at the front of the vehicle, those clusters containing main lamps such as xenon projectors which may have dynamic bending light functionality. Elegantly, the auxiliary lamps can be integrated with the respective headlamp clusters. In that case, or wherever the main lamps and the auxiliary lamps are adjacent one another, it is advantageous for the auxiliary lamps to be situated inboard of the main lamps so that the main lamps do not obstruct the lateral light output from the auxiliary lamps that is aimed across the longitudinal centre line of the vehicle.

The inventive concept also embraces a vehicle fitted with the adaptive front lighting system of the invention.

In order that the invention may be more readily understood, reference will now be made, by way of example, to the accompanying drawings in which:
Figure 1 is a schematic plan view of a vehicle taking a sharp bend, the vehicle using existing fixed bending light technology;
Figure 2 is a schematic plan view of a vehicle taking the same bend as in Figure 1, the vehicle in this case employing fixed bending light technology adapted in accordance with the invention;
Figure 3 is a schematic plan view of the vehicle shown in Figure 2, also serving as a system diagram of an embodiment of the invention to show how auxiliary lamps may be situated in a vehicle and activated;
Figure 4 is a graph showing how voltage may be applied to the auxiliary lamps in the system of Figure 3, in relation to steering angle of the vehicle; and
Figure 5 is a circuit diagram implementing the system of Figure 3 and the voltage supply characteristic of Figure 4.

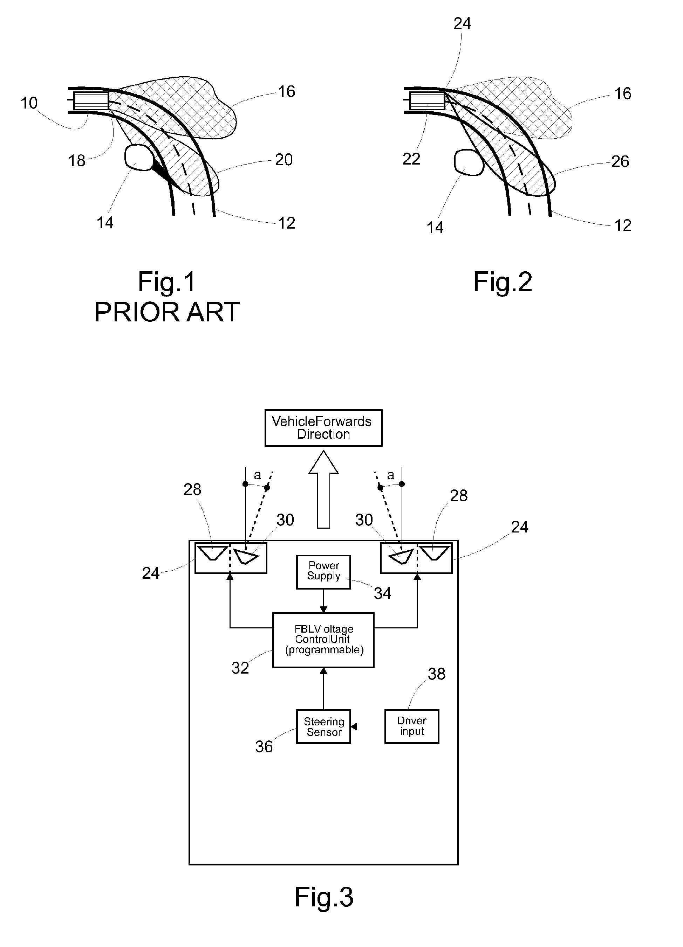

Referring firstly to Figure 1 of the drawings, a vehicle 10 using existing fixed bending light technology is shown when taking a right-hand bend 12 in darkness. An obstruction 14 such as a wall or hedge lies on the inside of the bend. In addition to fixed main lamps which together produce a main light output 16 directly ahead of the vehicle 10, the vehicle 10 has an auxiliary lamp in each of its headlamp clusters as will be explained below in more detail with reference to Figure 3. In this situation, the auxiliary lamp in the offside headlamp cluster 18 illuminates in accordance with steering wheel angle and speed, to project an auxiliary light output 20 to the offside of the vehicle 10.

It will be noted from Figure 1 that the obstruction 14 is illuminated by the auxiliary light output 20, risking dazzling the driver. Moreover, the obstruction 14 blocks a portion of the auxiliary light output 20, reducing its spread and range in the crucial area round the bend 12 where that light is most needed. Theoretically, the obstruction 14 could be low enough for the driver to see over the top of it and hence around the bend 12. However, it is particularly difficult to see what lies around the bend 12 in view of the contrast between the darkness there and the dazzling reflection from the obstruction 14 beside the vehicle 10, adjacent to the driver's line of sight through the bend 12.

Figure 2 shows the same situation, with like numerals used for like features, but now with a vehicle 22 equipped in accordance with the invention. Here, unlike the prior art shown in Figure 1, it is the auxiliary lamp in the nearside headlamp cluster 24 that illuminates in response to offside steering movement, and that lamp is oriented to project an auxiliary light output 26 to the offside of the vehicle 22. Thus, the auxiliary light output 26 is aimed from the nearside headlamp cluster 24 across the longitudinal centre line of the vehicle 22.

The advantages of the invention stem from the greater distance or radius of the illuminated auxiliary lamp from the centre of curvature of the bend 12. In particular, it will be noted that the auxiliary light output 26 now misses the obstruction 14, hence avoiding dazzling the driver and preserving the full spread and range of that output. So if the obstruction 14 is low enough for the driver to see over the top of it and hence around the bend, the invention increases the likelihood that the auxiliary lamp will be able to illuminate where the driver can see.

Moving on now to Figure 3, the vehicle 22 of Figure 2 is shown in plan view with the normal direction of travel as shown. The vehicle 22 has a pair of headlamp clusters 24 at its front, one to the nearside and the other to the offside in accordance with long-standing practice and legislation. Each cluster 24 contains a main lamp 28 which in this case is shown as being a fixed reflector for simplicity. However the main lamp 28 could be a projector and could be movable in a dynamic bending light arrangement if desired. Each cluster 24 also contains an auxiliary lamp 30 situated inboard of the main lamp 28 and directed toward the opposite side of the vehicle.

The beam of each auxiliary lamp 30 is at an angle 'a' with respect to the normal direction of travel of the vehicle 22. That angle may be determined by the manufacturer or there may be an adjustment provision whereby the driver can select a preference in that regard.

Operation of the auxiliary lamps 30 is controlled by a programmable FBL voltage control unit 32 that takes power from a power supply 34 and data input from a steering angle sensor 36. The steering angle sensor 36 is responsive in turn to driver input 38 through the vehicle steering wheel. The FBL voltage control unit 32 is programmed to execute an algorithm that selects an appropriate one of the auxiliary lamps 30 in accordance with steering direction and that then illuminates the selected lamp 30 with an intensity that depends upon the steering angle. As in existing FBL systems, vehicle speed data may also be input to the algorithm but that input has been omitted from Figure 3 for clarity. It is also possible for operation of the auxiliary lamps 30 to be determined by a look-up table stored in the FBL voltage control unit 32, that table listing control responses appropriate to various combinations of steering angle and, optionally, vehicle speed.

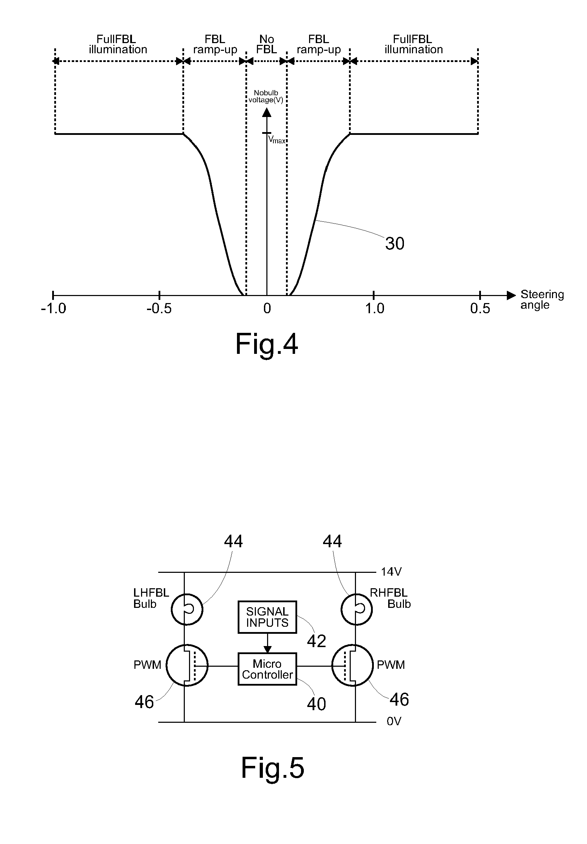

A typical relationship between steering angle and intensity of illumination of the auxiliary lamps 30 is shown in Figure 4 of the drawings. The graph of Figure 4 plots voltage applied to the auxiliary lamps 30 on the vertical axis against steering angle expressed on the horizontal axis. A negative steering angle on the horizontal axis of the graph indicates that left steering lock is applied, hence selecting the auxiliary lamp 30 in the nearside headlamp cluster 24, whereas a positive steering angle indicates that right steering lock is applied, hence selecting the auxiliary lamp 30 in the offside headlamp cluster 24.

The circuit diagram of Figure 5 shows that the FBL voltage control unit 32 contains a microcontroller 40 that responds to signal inputs 42 as aforesaid to control power supplied to the bulbs 44 of the auxiliary lamps 30 by virtue of respective pulse width modulator circuits 46. Instead of pulse width modulation, it is also possible to employ variable resistors to apply variable voltage across the auxiliary lamps.

It will be noted from Figure 4 that there is no illumination of either auxiliary lamp 30 where the steering wheel is within a small range of movement either side of straight-ahead: no voltage (V₀) is then applied to either auxiliary lamp. This helps to prevent unnecessary and distracting operation of the auxiliary lamps due to normal steering corrections when driving straight ahead or on very gentle curves. Increasing steering angle increases the voltage applied to the selected auxiliary lamp to switch it on with progressively increasing brightness until voltage, and hence brightness, reaches Vₘₐₓ and then plateaus. The voltage ramp-up characteristic with respect to steering angle may be determined by the manufacturer or there may be an adjustment provision whereby the driver can select a preference in that regard.

Many variations are possible within the inventive concept. For example, as noted in Figure 3, the auxiliary lamps need not necessarily be situated in the clusters that contain the main lamps: they could be separate units. They could even be mounted elsewhere on the vehicle provided that they are to the sides of the vehicle and preferably as far forward as possible to make the most favourable beam direction with respect to bends being taken. Also, where the FBL voltage control unit has a speed data input, the voltage or power ramp-up characteristic may be modified in accordance with vehicle speed, for example by being more responsive to steering angle when the vehicle is travelling quickly.

A possible alternative to a steering angle sensor for sensing turn direction or turn radius would be a yaw rate sensor to determine vehicle attitude as it negotiates a turn. As the amount of lean or roll as the vehicle corners would be dependant on both vehicle speed and bend curvature, a single yaw rate sensor could, in theory, remove the need for separate speed and steering angle sensors.

These and other possible variations mean that reference should be made to the appended claims rather than to the foregoing specific description in determining the scope of the invention.

## Claims

1. An adaptive front lighting system for a vehicle, the system comprising:
first and second light sources situated respectively toward the left and right sides of the vehicle with respect to its normal direction of travel;
a turn sensor arranged to determine vehicle direction; and
a controller for controlling the light sources in dependence upon vehicle direction data from the sensor, the controller being programmed selectively to cause a light source to emit light to one or other side of the vehicle corresponding to the vehicle direction;
wherein the first light source situated toward the left side of the vehicle is arranged to emit light to the right side of the vehicle, and the second light source situated toward the right side of the vehicle is arranged to emit light to the left side of the vehicle; and
wherein the controller is responsive to the steering angle to vary light output from the selected light source accordingly.

2. The system of Claim 1, wherein the turn sensor is a vehicle steering sensor arranged to determine steering direction and steering angle.

3. The system of Claim 1 or Claim 2, wherein the light output is variable in brightness in accordance with steering angle.

4. The system of Claim 2 or Claim 3, wherein a range of steering wheel movement around the straight-ahead position is defined in which neither of the light sources emits light to a side of the vehicle.

5. The system of any preceding Claim, further comprising a vehicle speed sensor to determine vehicle speed.

6. The system of Claim 5, wherein the vehicle speed sensor includes wheel speed sensors of a vehicle anti-lock brake system.

7. The system of Claim 5 or Claim 6, wherein the controller modifies the operation of the light sources in accordance with vehicle speed.

8. The system of any preceding Claim, wherein the direction of illumination of the light sources with respect to the vehicle is variable.

9. The system of Claim 8, wherein the direction of illumination is variable under driver control or by the controller, either before driving or in real-time while driving.

10. The system of any preceding claim, wherein the light sources are auxiliary lamps supplemental to a main lighting system of a vehicle.

11. The system of Claim 10, wherein the main lighting system employs first and second headlamp clusters toward the left and right sides at the front of the vehicle, those clusters containing main lamps that have dynamic bending light functionality.

12. The system of Claim 11, wherein the auxiliary lamps are integrated with the respective headlamp clusters.

13. The system of any of Claims 10 to 12, wherein the auxiliary lamps are situated inboard of the main lamps.

14. A vehicle fitted with the adaptive front lighting system of any preceding claim.
